# EUROPEAN PATENT SPECIFICATION

(11) **EP 0 682 867 B1**
(45) Date of publication and mention of the grant of the patent: **02.09.1998**
(21) Application number: 95303074.9
(22) Date of filing: 05.05.1995
(51) Int. Cl.: A01N 57/20, A01N 57/16, C04B 38/00, B01D 39/20, C09K 17/02

(54) **Antibacterial ceramic and antibacterial ceramic filter**
Antibakterielle Keramik und antibakterieller keramischer Filter
Céramique antibactérien et filtre céramique antibactérien

(30) Priority: 16.05.1994 JP 101429/94
(43) Date of publication of application: 22.11.1995
(73) Proprietor: NGK INSULATORS, LTD., Nagoya City Aichi Pref. (JP); NGK ADREC CO., LTD., Nagoya City, Aichi Pref. (JP); SANGI COMPANY LIMITED, Tokyo 104 (JP)
(72) Inventor: Shirakawa, Hiroshi, Gifu-prefecture, 509-01 (JP); Yamakawa, Osamu, Kani-city, Gifu-prefecture, 509-02 (JP); Nihonmatsu, Hiroaki, Kani-gun, Gifu-prefecture, 505-01 (JP); Atsumi, Kiminori, Saitama-prefecture 349-11 (JP)
(74) Representative: Paget, Hugh Charles Edward

(56) References cited:
- EP-A- 0 360 593
- EP-A- 0 427 704
- GB-A- 2 238 044
- US-A- 4 145 291

## Description

### BACKGROUND OF THE INVENTION AND RELATED ART STATEMENT

The present invention relates to an antibacterial ceramic and an antibacterial ceramic filter. More particularly, the present invention relates to a light-weight antibacterial ceramic, the method for producing a light-weight antibacterial ceramic, and an antibacterial ceramic filter which can remove and extirpate various bacteria. antibacterial ceramics each of which has an antibacterial metal such as silver, copper, and zinc loaded on a ceramic are known. Such antibacterial ceramics are used as soil conditioners and water conditioners because of their antibacterial property, anti-mildew property, and water-holding property. An antibacterial ceramic having the shape of a ball has been used for rearing chicks, prawns, or the like. An antibacterial ceramic having a shape of a pellet whose specific surface area is enlarged or a shape of a Rasching ring has been used for heating water to improve its quality.

The aforementioned antibacterial ceramic is formed to be relatively porous so as to enhance its antibacterial property. However, many of such conventional antibacterial ceramics were dense and heavy. Antibacterial materials each made by adding an antibacterial metal to a plastic or a glass are also known. However, such antibacterial materials have a low antibacterial property because they have a low porosity.

A ceramic filter as a precise filtering film has been also known.
The filter can remove mildew and various bacteria in a liquid.

Regarding a garden, or the like, provided in a building or on the roof, not only soil itself of the garden but also a `soil conditioner is required to be lightweight because of the matter of structural strength of the building. However, the problem was that the aforementioned antibacterial ceramics are not suitable for a roof garden or the like since they are relatively heavy. On the other hand, another problem was that roots of plants in a roof garden are liable to rot because a roof garden is ill drained, and as a result, such a plant has a short life.

Another problem was that a conventional ceramic filter can not always remove various bacteria completely because of diameters of the pores, etc., though it can effectively remove various bacteria or floating particles in a liquid.

### SUMMARY OF THE INVENTION

In consideration of such problems, an object of the present invention is to provide a light-weight antibacterial ceramic which is suitably applicable to a roof garden, etc., and a method for producing the light-weight antibacterial ceramic.

Another object of the invention is to provide an antibacterial ceramic filter which has an antibacterial property which can remove and extirpate various bacteria and floating material.

The antibacterial ceramic of the present invention is set out in claim 1.

A method for producing an antibacterial ceramic, according to the present invention, is set out in claim 8.

An antibacterial ceramic filter of the present invention is set out in claim 10.

In the antibacterial ceramic of the present invention, the ceramic can be lightened and the surface area can be enlarged because a bulk density of ceramic particle is appropriately controlled. Therefore, the antibacterial ceramic can be suitably used for a roof garden, etc., and the chance to be in contact with bacteria can be increased, which improves the antibacterial property.

On the other hand, the antibacterial ceramic filter of the present invention can not only remove but also extirpate bacteria and further improve clarity of a liquid. It is also possible to make a diameter of pores a little larger than a conventional one so that the filtering time is shortened without decreasing clarity of the liquid because the antibacterial ceramic of the present invention can extirpate the bacteria which pass the pores and are not removed.

### DETAILED DESCRIPTION OF THE INVENTION

The antibacterial ceramic of the present invention is hereinbelow described in more detail.

The antibacterial ceramic of the present invention contains an antibacterial material made by loading an antibacterial metal or metallic ion on a carrier. The antibacterial material preferably has a composition of an antibacterial metal or metallic ion of 0.01 - 20 wt% and a carrier of 99.99-80 wt%.

When the aforementioned antibacterial metal or the like is less than 0.01 wt%, the antibacterial ceramic has a low antibacterial property. When the antibacterial metal or the like is more than 20 wt%, the cost of the antibacterial ceramic becomes high because the cost of such a metal or the like is high.

The antibacterial metal or metallic ion may be silver, copper, zinc, platinum, tin, arsenic, lead, cadmium, chromium, or any mixture of these components.

The aforementioned carrier is phosphate, silica or zeolite, or any mixture of these components. Phosphate for the carrier may be calcium phosphate, zinc phosphate, zirconium phosphate, aluminum phosphate, or any mixture of these components. Calcium phosphate for the carrier may be tricalcium phosphate, calcium hydrogenphosphate, calcium pyrophosphate, calcium metaphosphate, hydroxy apatite, apatite halide, or any mixture of these components.

Methods for loading an antibacterial metal or metallic ion on the aforementioned carrier are not limited. Applicable methods are, for example, ion exchange, firing treatment at 800°C or higher after ion exchange, heating at about 80°C or higher an aqueous solution containing a water-soluble salt having an antibacterial component and then collecting precipitate, etc. Among these methods, the best method is the one in which a water-soluble salt having an antibacterial component is used in view of prevention of elution of the antibacterial metallic component and reducing the production cost.

Incidentally, of the aforementioned calcium ceramics to be used for the carrier each is highly safe for a human body. Further, such a calcium ceramic easily absorbs a water-soluble salt of antibacterial metal and metallic ion when an antibacterial metal is loaded. Therefore, the calcium ceramics are suitably applicable to the present invention.

An antibacterial ceramic of the present invention includes 1) the aforementioned antibacterial material of 0.01 - 20 wt% and 2) an oxide inorganic material and/or a non-oxide inorganic material 99.99 - 80 wt%.

It is not preferable that the antibacterial material be less than 0.01 wt% or more than 20 wt% because an antibacterial property decreases or because the production costs a lot respectively.

The aforementioned oxide inorganic material or non-oxide inorganic material may be any of materials which are water-insoluble and harmless to human bodies, animals and plants. The oxide inorganic material may be alumina, cordierite, mullite, silica, clay, or the like. The non-oxide inorganic material may be silicon carbide, silicon nitride, or aluminum nitride. Note that self-sintering material such as clay or an inorganic binder such as frit can be mixed with these inorganic materials.

Further, an antibacterial ceramic of the present invention is light because it has a particle bulk density of 0.6 - 2.0 g/cm³, preferably 0.6 - 1.2 g/cm³. Therefore, an antibacterial ceramic of the present invention can be preferably used as a soil conditioner, particularly for a garden on the roof, or the like, and its conveyability is excellent. It is not preferable that an antibacterial ceramic has a bulk density of less than 0.6 g/cm³ because it is light enough to be scattered in the wind. It is not preferable either that an antibacterial ceramic has more than 2.0 g/cm³ because it is too heavy and an antibacterial property decrease since porosity becomes small.

Since the aforementioned antibacterial ceramic of the present invention has an excellent antibacterial property and is safe for human bodies or the like, the ceramic can be not only used as a soil conditioner for a garden on the roof or the like but also applied to a soil for home gardening. Further, the ceramic can be used as sand for evacuation by a pet such as a dog, a cat, etc. An antibacterial ceramic of the present invention can prevent various bacteria from generating and make animals' and plants' lives longer while satisfying a proof load on a building.

A method for producing an antibacterial ceramic of the present invention is hereinbelow explained.

An antibacterial ceramic of the present invention is produced by a method including the steps of: preparing an antibacterial ceramic material by loading an antibacterial metal or metallic ion on a carrier; mixing the obtained antibacterial ceramic material of 0.01 - 20 wt% with an oxide inorganic material and/or a non-oxide inorganic material of 99.99 - 80 wt% to obtain a first mixture; mixing a combustible material at 5 - 50 weight parts with 100 weight parts of the first mixture to obtain a second mixture; and firing the second mixture at a temperature of 500 - 1300°C.

The aforementioned combustible material may be a carbon powder, a grain powder such as wheat flour or rice flour, a sawdust, or the like. These combustibles are consumed by the aforementioned firing and have a function of making a resultant antibacterial ceramic light and porous. It is not preferable that less than 5 weight parts or more than 50 weight parts of the combustible material be added because the effect of lowering bulk specific gravity is small or a resultant ceramic is liable to be crushed. Note that the order of adding an antibacterial material, an inorganic material, and a combustible is not limited, and any order is acceptable if the aforementioned powder for firing having a predetermined composition can be obtained.

An antibacterial ceramic filter of the present invention is now described in detail.

An antibacterial ceramic filter of the present invention includes: the aforementioned antibacterial material at 0.01 - 20 wt%; and a base material phase at 99.99 - 80 wt% having 1) an aggregate phase containing an oxide inorganic material and/or a non-oxide inorganic material and 2) an inorganic binder phase.

An oxide inorganic material and a non-oxide inorganic material to be used for forming an aggregate phase by firing are not limited, and any water-insoluble material which is harmless to human bodies, animals, and plants can be employed. An oxide inorganic material may be alumina, mullite, zirconia, andalusite, silica ceramic material, glass, or the like. A non-oxide inorganic material may be silicon carbide, silicon nitride, and aluminum nitride.

A material of the aforementioned inorganic binder may be an inert self-sintering material such as clay or inorganic binding material such as frit. A ratio of such a material to the aforementioned aggregate is preferably within the range of 1 - 50 wt%. When the ratio is less than 1 wt%, the resultant filter does not have sufficient strength. When the ratio is more than 50 wt%, the resultant filter has a low porosity, which lowers water permeability.

Each of the pores of a ceramic filter of the present invention preferably has a diameter ranging 20 to 8000 µm. When the diameter of a pore is less than 20 µm, the pore is prone to be clogged up with impurities, which lowers water-permeability of the filter in the early stages. When the diameter of a pore is more than 8000 µm, the filter has a low antibacterial property.

Incidentally, a configuration of an antibacterial ceramic filter of the present invention is not particularly limited, and various kinds of configurations such as a shape of plate, cylinder, or the like can be employed. A use of the ceramic filter is not limited, and it can be suitably used for purifying water in a Japanese traditional bath tub and water for a large bathing place such as a swimming pool.

When an antibacterial ceramic filter of the present invention is used, a particular tank or the like is not necessary, and a flow passage or the like is directly equipped with the ceramic filter.

A method for producing an antibacterial ceramic filter of the present invention is hereinafter described.

A ceramic filter of the present invention includes the steps of: mixing the aforementioned antibacterial material at 0.01 - 20 wt% with the aforementioned mixture at 99.99 - 80 wt% containing an aggregate and said inorganic binder phase; adding a compatible material at 0 - 30 weight parts to the obtained mixture of 100 weight parts to prepare another mixture for forming a compact; preparing a compact having a predetermined shape by the mixture for forming a compact; and firing the compact at 1300°C or less, preferably at 700 - 1000°C.

Incidentally, order of adding an antibacterial material, an aggregate, an inorganic binder, and a compatible material is not limited in the aforementioned method, and any order is acceptable if the aforementioned mixture having a predetermined composition for forming a compact can be obtained.

In this method, the 50% average particle diameter of the aggregate is preferably 0.1 - 20 mm. When this diameter is less than 0.1 mm, water-permeability becomes low because of clogging in the early stages though a discriminating ability is high. When the diameter is more than 20 mm, the filter has a low antibacterial property, and a discriminating ability of the filter is lowered.

The aforementioned inorganic bonding material has a particle diameter of 100 µm or less, preferably 44 µm or less, and the blending ratio of the inorganic bonding material to the aforementioned aggregate is preferably 1 - 50 %.

Further, porosity and pore diameter of a ceramic filter can be adjusted as necessary by adding the aforementioned combustible material. For example, the combustible may have a particle diameter of 1 - 100 µm.

The present invention is hereinbelow illustrated in more detail by Examples. However, the present invention is not limited to these Examples.

### Examples 1 - 6

There were kneaded by a kneader a mixture of an oxide inorganic material (base material A) mainly consisting of cordierite, an antibacterial material produced by loading Ag on hydroxyapatite, an appropriate amount of binder, and a combustible material at 10 - 50 weight parts to the base material A of 100 weight parts in the ratio shown in Table 1. The obtained mixture was dried at 110°C, and then fired at 1100°C in the ambient air. Then, it was crushed by a roll crusher so as to obtain a light-weight antibacterial ceramic. Incidentally, in Tables 1 - 9, "amount of metal" refers to the amount of Ag or the like contained in the whole light-weight antibacterial ceramic.

The obtained light-weight antibacterial ceramic was dried and then measured for the dry weight. The dried ceramic was treated for three hours under a reduced pressure of 730 mmHg and then measured for weight in water. Then the ceramic saturated with water was measured for weight. The particle bulk density of the ceramic was calculated from the obtained three weights. The results are shown in Table 1.

### Performance evaluation

### (1) Brittleness

Impact test was given to each of the light-weight antibacterial ceramics to be crushed by an apparatus for Charpy impact test under the conditions that a pendulum has a weight of 1 kg, a pendulum rod has a length of 50 cm, and the angle of oscillation between the perpendicular portion and the top portion of a swing has 45°. The crushed light-weight antibacterial ceramic was sieved by a sieve #100, and the ceramic was measured for brittleness by calculating the ratio of amount of the crushed ceramic which passed the sieve. The results are shown in Table 1. In Table 1, the marks ⓞ, ○, △ and X denote as follows:
- ⓞ: 10% or less was passed through the sieve.
- ○: 10 - 20% was passed.
- △: 20 - 50% was passed.
- X: 50% or more was passed.

### (2) The antibacterial property

Two liquids each containing about 10⁶ colon bacilli were prepared for each light-weight ceramic. To one liquid was added a light-weight antibacterial ceramic at 1.5 wt%, and to the other liquid was added the same light-weight antibacterial ceramic at 10 wt%. After 6 hours and after 24 hours, the two liquids for each kind of ceramic were measured for the number of colon bacilli. An antibacterial property of each light-weight antibacterial ceramic was judged from the ratio of decreased colon bacilli. The results are shown in Table 1.

### Comparative Examples 1 - 3

The ceramics were prepared and tested in the same manner as in Examples 1 - 6 except that a bulk density was varied. The results are shown in Table 1.

### Examples 7 - 14

There were used a mixture (base material B) of cordierite and frit as an oxide inorganic material and a hydroxyapatite on which Ag and Zn were loaded as an antibacterial material. Except for this, the ceramics were prepared and tested in the same manner as in Examples 1 - 5. The results are shown in Table 2.

### Comparative Examples 4

The ceramic was prepared and tested in the same manner as in Examples 6 - 13 except that the antibacterial material was not added. The results are shown in Table 2.

### Examples 15 - 17

The ceramics were prepared and tested in the same manner as in Examples 1 - 6 except that mullite (base material C) was used as an oxide inorganic material and calcium hydrogenphosphate on which Cu was loaded were used as an antibacterial material. The results are shown in Table 3.

### Examples 18 - 20

The ceramics were prepared and tested in the same manner as in Examples 15 - 17 except that silicon nitride (base material D) was used as a non-oxide inorganic material.

### Examples 21 - 26

The ceramics were prepared and tested in the same manner as in Examples 1 - 6 except that a mixture of cordierite and clay was used as an oxide inorganic material, that calcium phosphate on which Ag was loaded was used as an antibacterial material, and that each of the ceramics were fired at a temperature shown in Table 4.

### Examples 27 - 34

There were mixed 1) a base material F containing mullite (aggregate) having a 50% particle diameter of 1.0 mm and a frit (inorganic binder), 2) an antibacterial material produced by loading copper on calcium hydrgenphosphate, and 3) an appropriate amount of binder in a KANTO mixer so as to have a ratio shown in Table 5. The obtained mixture was subjected to hydraulic pressing under a pressure of 300 Kg/cm² given by a pressurizing substance to abtain a plate-shaped compact having dimensions of 300 x 300 x 30 mm (thickness). The compact was dried at 110°C and then fired at 900°C in the ambient air so as to obtain an antibacterial ceramic filter.

Each of the obtained antibacterial ceramic filters was measured for a porosity in the same manner as the aforementioned measurement for a particle bulk density. The results are shown in Table 5. The antibacterial property of each of the antibacterial ceramic filters was measured in the same manner, and the results are shown in Table 5.

### Comparative Example 5

The ceramic filter was obtained and tested in the same manner as in Examples 27 - 34 except that an antibacterial material was not added. The results are shown in Table 5.

### Examples 35 - 38, Comparative Example 6

The ceramic filters were obtained and tested in the same manner as in Examples 27 - 34 except that there were used 1) a base material G containing alumina having a 50% average particle diameter of 0.5 mm and frit and 2) an antibacterial material produced by loading Ag and Zn on hydroxyapatite so as to vary the porosity of each filter. The results are shown in Table 6.

### Examples 39 - 46

The ceramic filters were obtained and tested in the same manner as in Examples 27 - 34 except that the 50% average particle diameter of an aggregate in a base material F was varied. The results are shown in Table 7.

### Examples 47 - 54

The ceramic filters were obtained and tested in the same manner as in Examples 39 - 46 except that 10% by wt. of antibacterial material is added. The results are shown in Table 8.

### Examples 55 - 57

The ceramic filters were obtained and tested in the same manner as in Examples 27 - 34 except that the 50% average particle diameter of the aggregate and the porosity were varied. The results are shown in Table 9.

### Examples 58-60

The ceramic filters were obtained and tested in the same manner as in Examples 55 - 57 except that a mixture of non-oxide SiC (aggregate) and a frit was used. The results are shown in Table 9.

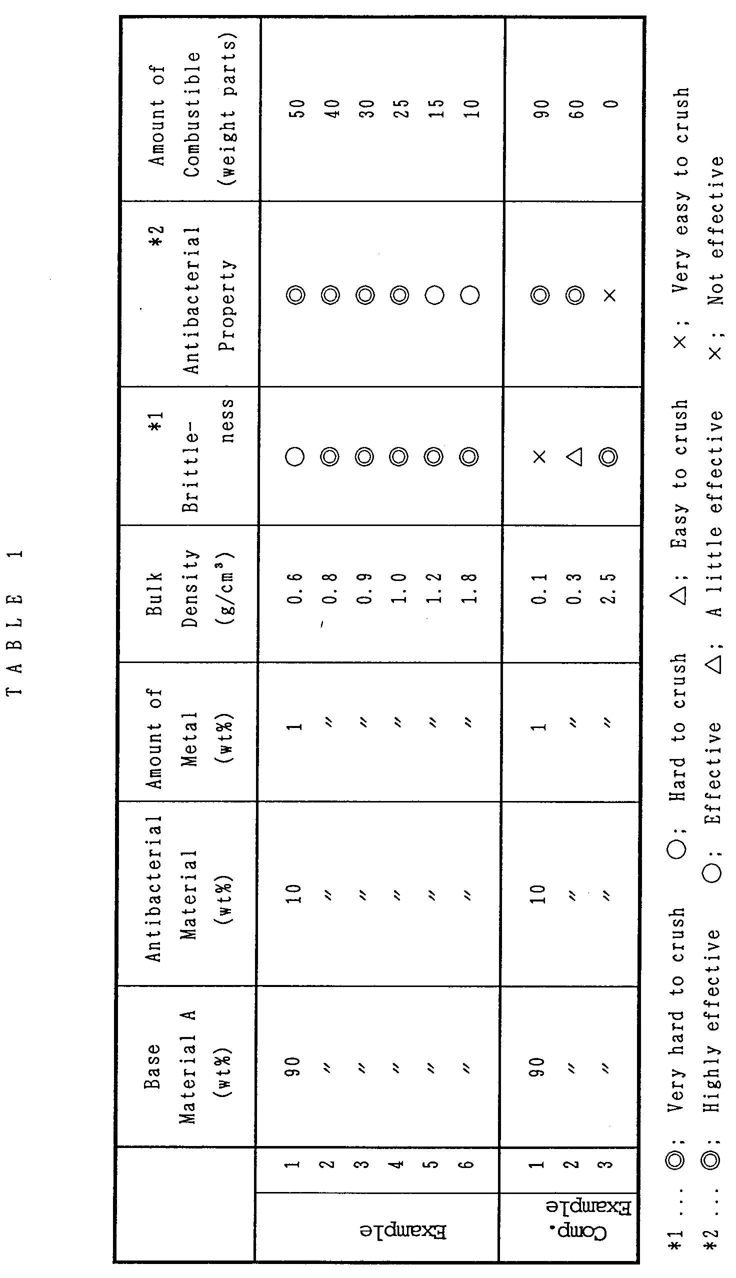

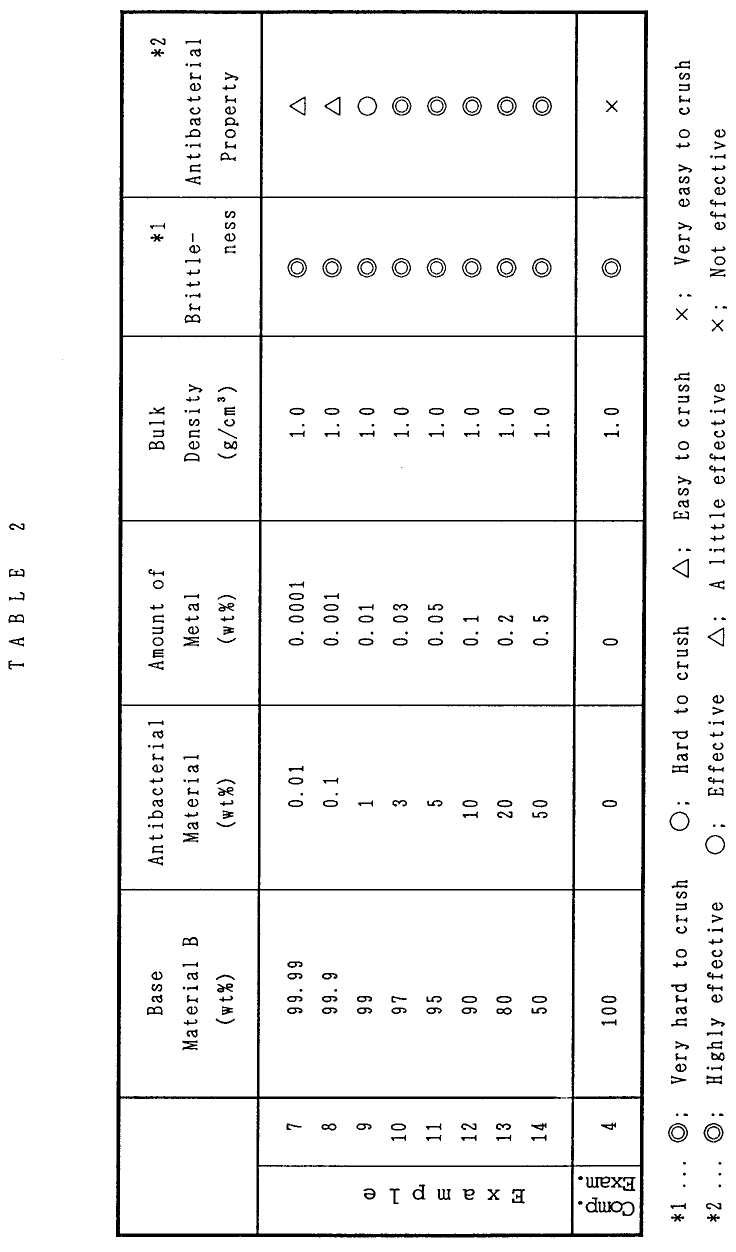

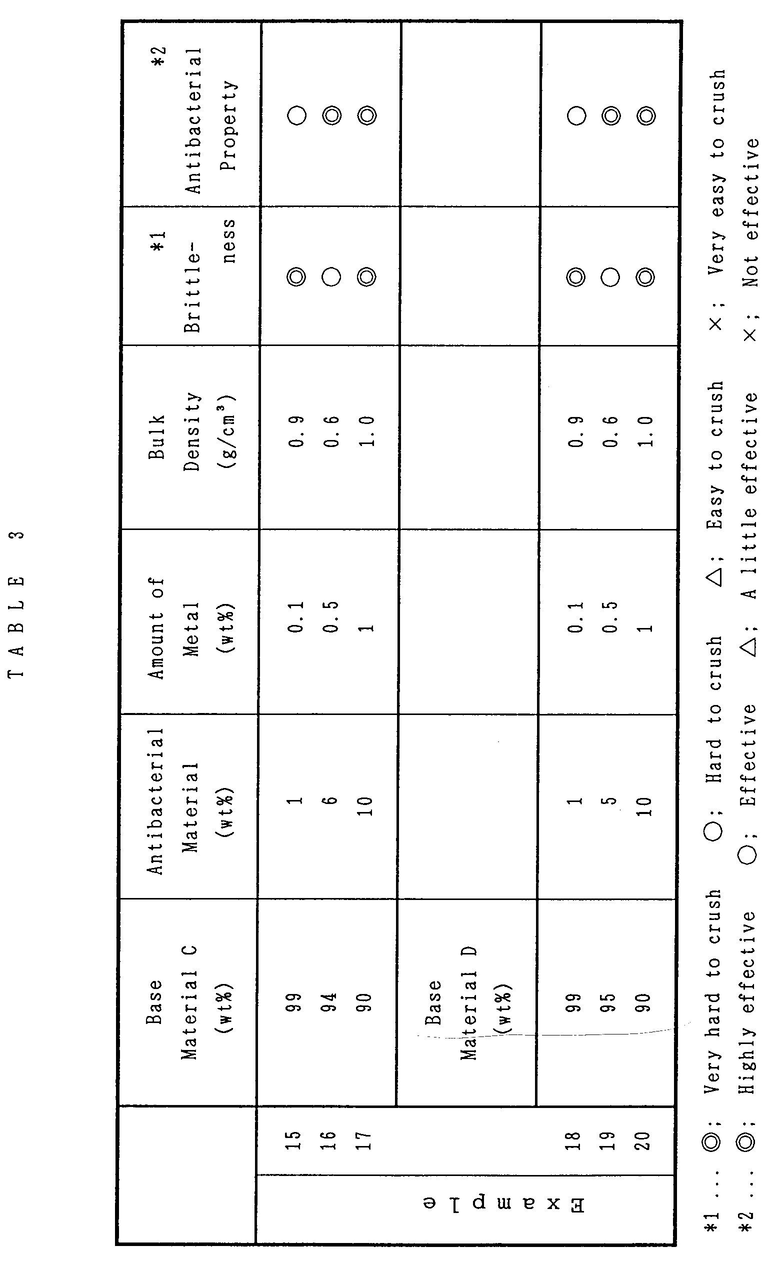

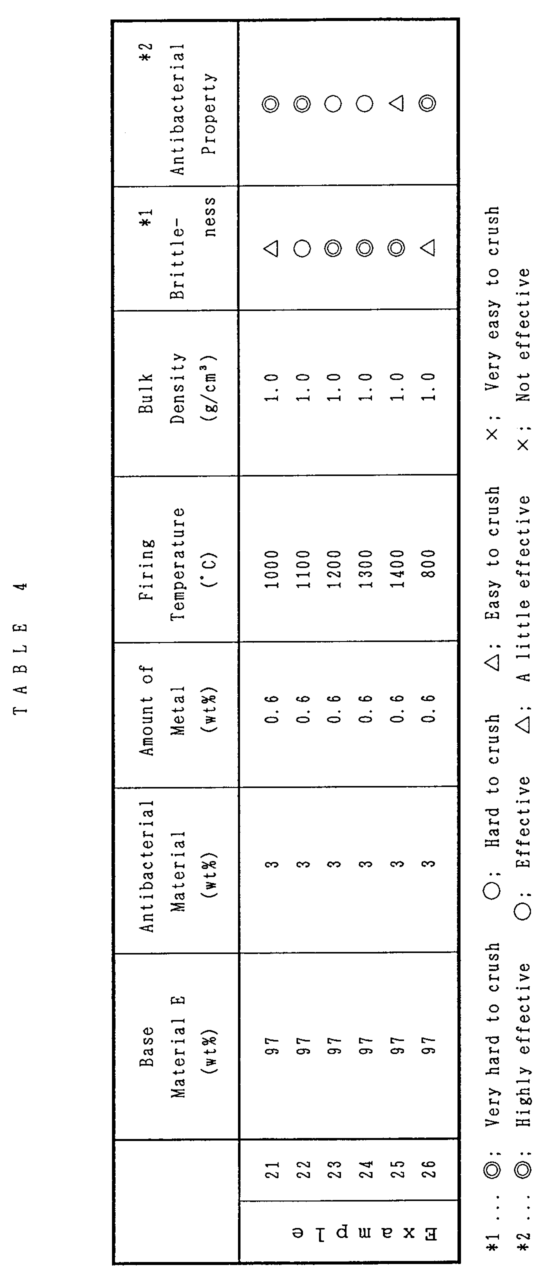

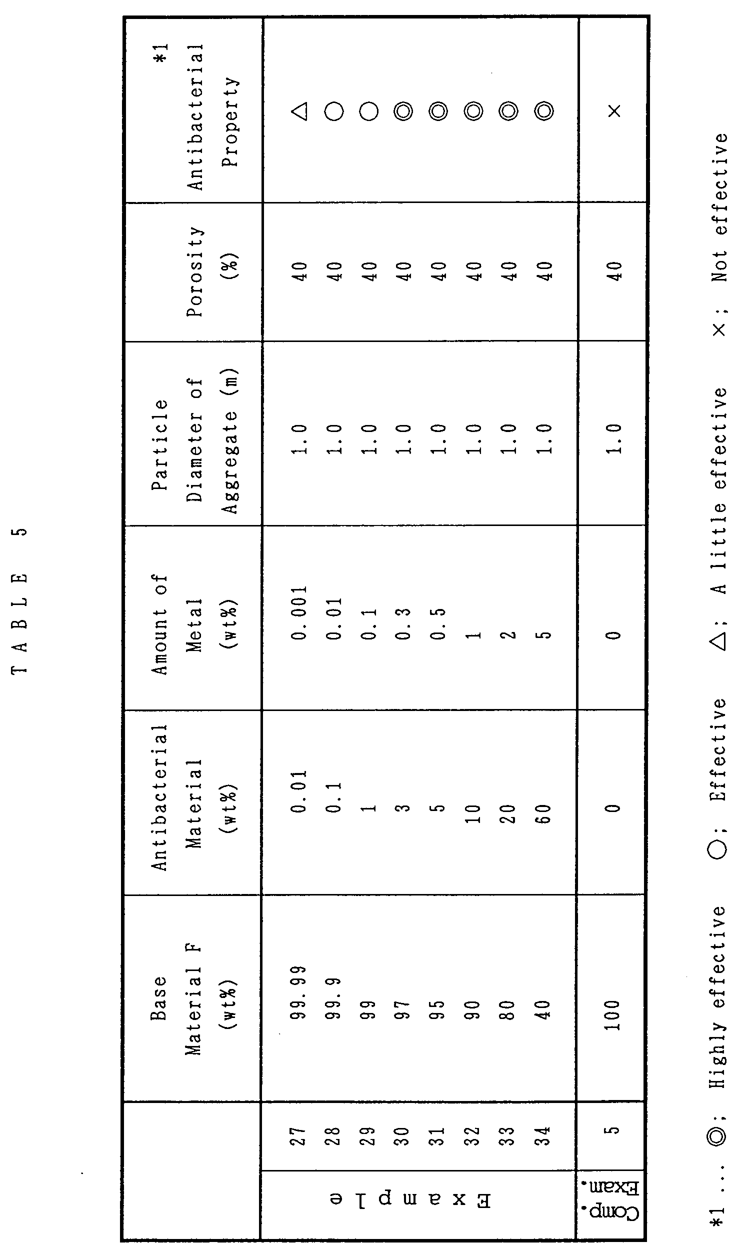

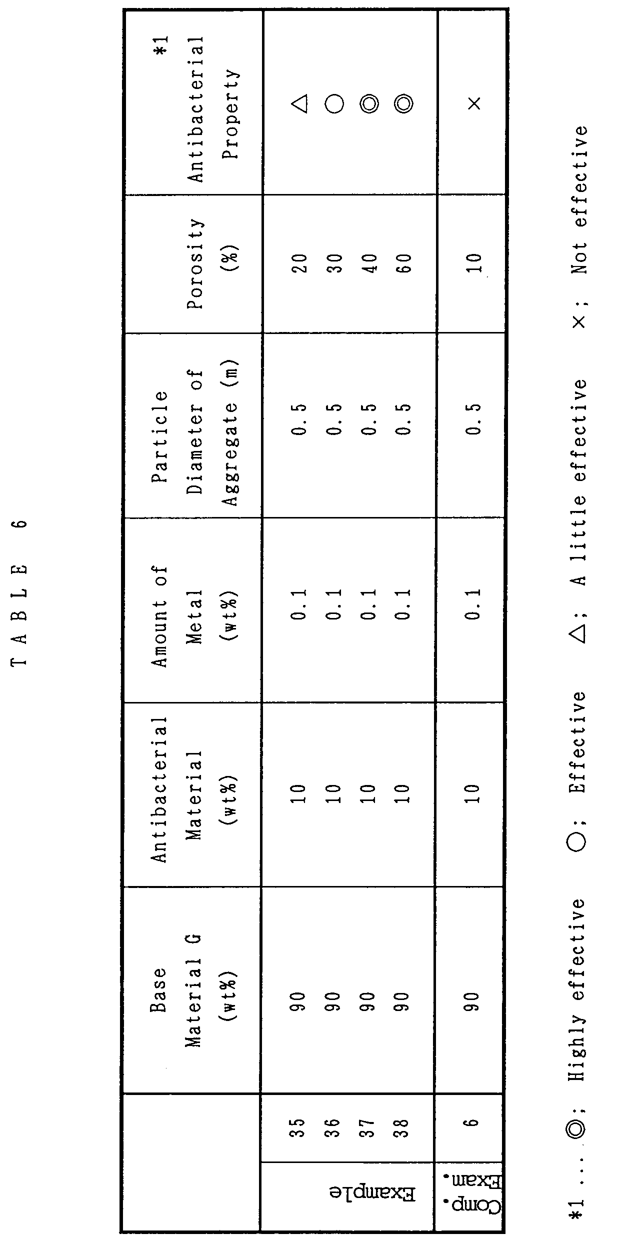

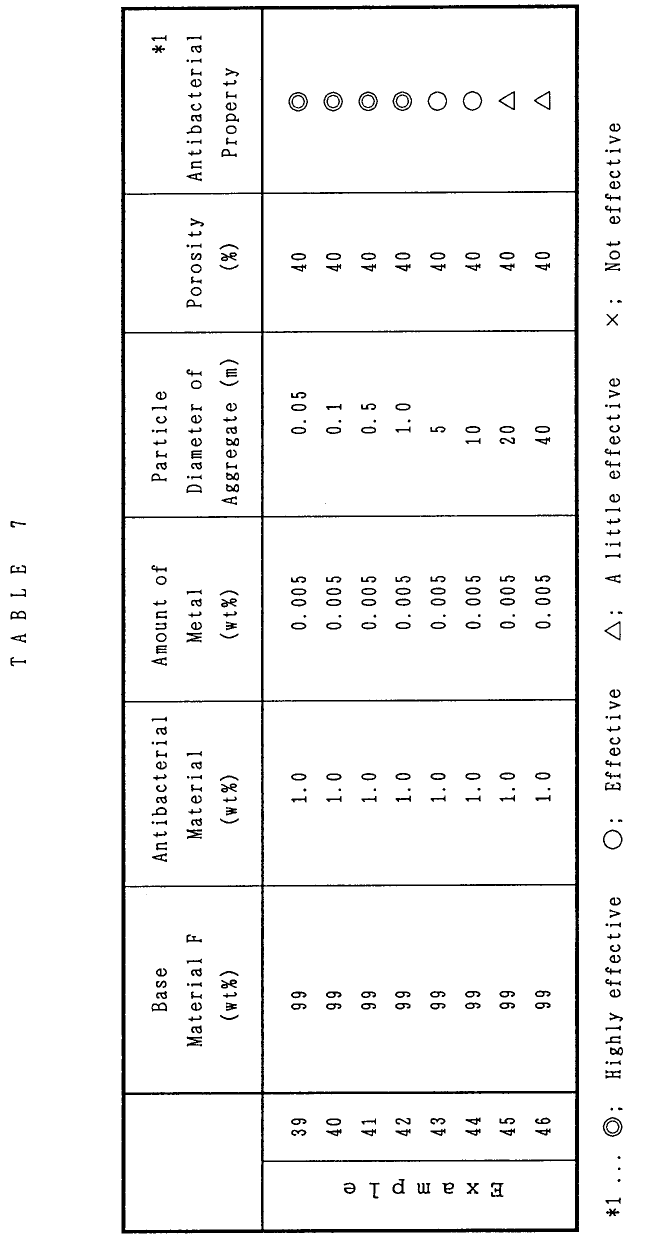

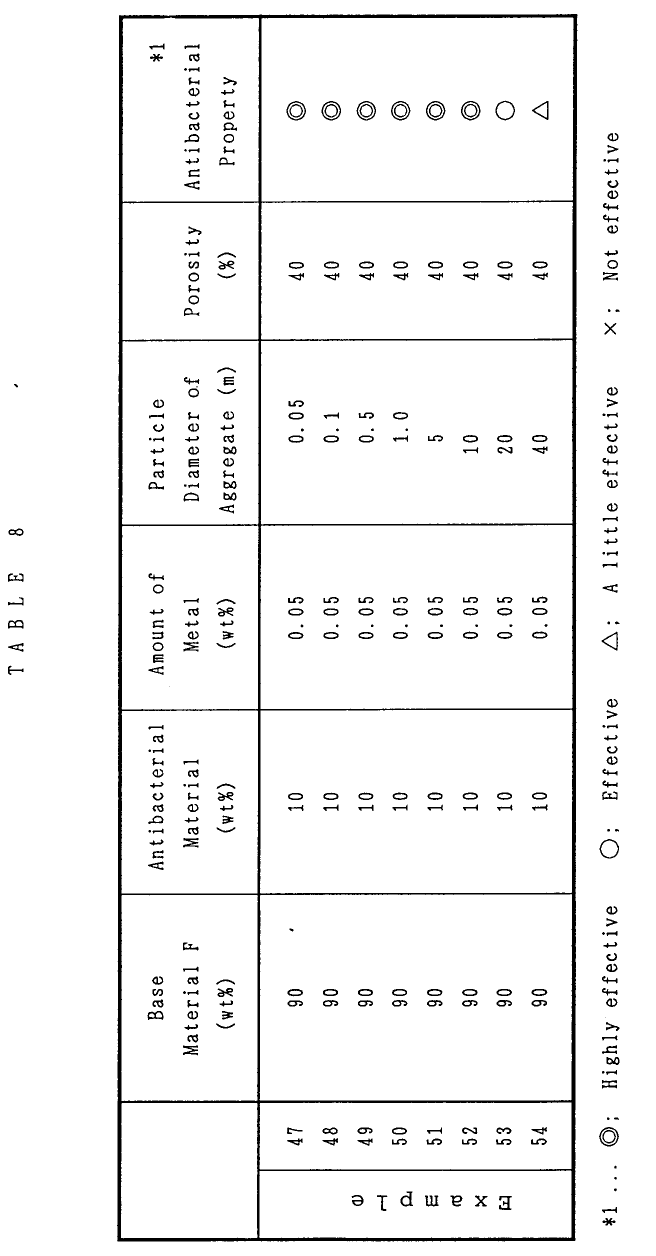

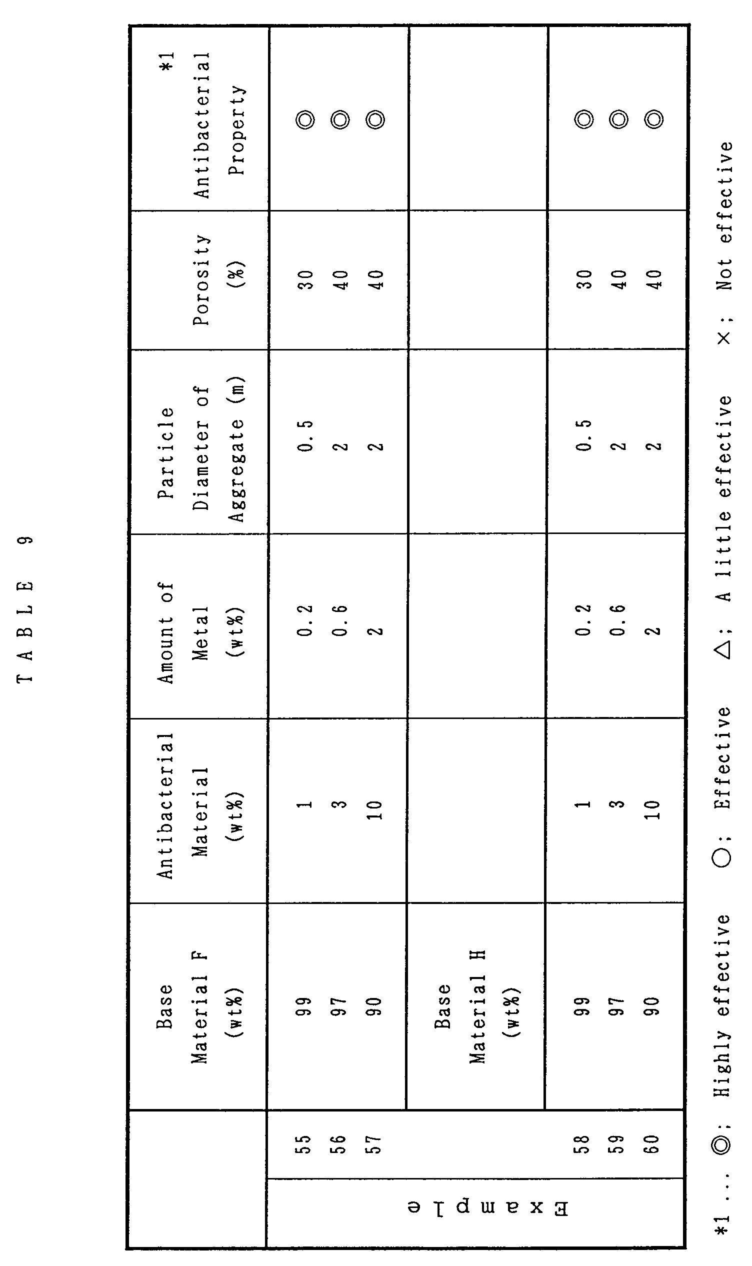

As described above, according to the present invention, there are provided a light-weight antibacterial ceramic suitably applicable to a roof garden or the like, a method for producing the light-weight antibacterial ceramic, and an antibacterial ceramic filter capable of removing and extirpating various bacteria and suspensions. Bulk density and porosity of the sintered ceramic are controlled by mixing an antibacterial metal with particular materials and firing.

## Claims

1. An antibacterial ceramic comprising:
0.01 - 20 wt% of an antibacterial material comprising a carrier and at least one antibacterial metal or metallic ion loaded on the carrier, the carrier comprising at least one component selected from phosphate, silica and zeolite, and
80 - 99.99 wt% of an oxide inorganic material and/or a non-oxide inorganic material,
said antibacterial ceramic having a particle bulk density of 0.6 - 2.0 g/cm³.

2. An antibacterial ceramic according to claim 1, wherein said antibacterial material comprises 0.01 - 20 wt% of the antibacterial metal or metallic ion and 99.99 - 80 wt% of the carrier.

3. An antibacterial ceramic according to claim 1 or 2, wherein said antibacterial metal or metallic ion comprises at least one component selected from silver, copper, zinc, platinum, tin, arsenic, lead, cadmium and chromium.

4. An antibacterial ceramic according to any one of claims 1 to 3 wherein said carrier comprises a phosphate which is at least one component selected from calcium phosphate, zinc phosphate, zirconium phosphate and aluminium phosphate.

5. An antibacterial ceramic according to claim 4, wherein said phosphate comprises at least one component selected from tricalcium phosphate, calcium hydrogenphosphate, calcium pyrophosphate, calcium metaphosphate, hydroxyapatite, apatite halide.

6. An antibacterial ceramic according to any one of claim 1 to 5, wherein said oxide inorganic material and said non-oxide inorganic material are insoluble in water and substantially harmless to human bodies, animals and plants.

7. Use of an antibacterial ceramic according to any one of claims 1 to 6, as a soil conditioner for a garden provided in a building or on a roof top.

8. A method for producing an antibacterial ceramic comprising the steps of:
preparing an antibacterial ceramic material by loading an antibacterial metal or metallic ion on a carrier, the carrier comprising at least one component selected from phosphate, silica and zeolite;
mixing 0.01 - 20 wt% of the obtained antibacterial ceramic material with 99.99 - 80 wt% of an oxide inorganic material and/or a non-oxide inorganic material to obtain a first mixture;
mixing 5 - 50 weight parts of a combustible material with 100 weight parts of said first mixture to obtain a second mixture; and
firing the second mixture at a temperature of 500 - 1300°C.

9. A method for producing an antibacterial ceramic according to claim 8, wherein said combustible material is a carbon powder, a grain powder such as wheat flour or rice flour, or a sawdust.

10. An antibacterial ceramic filter comprising:
(i) 80 - 99.99 wt% of a base material phase comprising
an aggregate phase comprising an oxide inorganic material and/or a non-oxide material;
an inorganic binder phase; and
(ii) 0.01 - 20 wt% of an antibacterial material comprising a carrier and at least one antibacterial metal or metallic ion loaded on said carrier; said carrier comprising at least one component selected from phosphate, silica and zeolite,
said antibacterial ceramic filter having a porosity of 20% or more.

11. An antibacterial ceramic filter according to claim 10, wherein said filter has a pore diameter ranging from 20 µm to 8000 µm.

## Patentansprüche

1. Antibakterielle Keramik, umfassend:
0,01-20 Gew.-% aus antibakteriellem Material, das einen Träger und zumindest ein auf den Träger geladenes antibakterielles Metall oder Metallion umfaßt, wobei der Träger zumindest eine aus Phosphat, Siliziumoxid und Zeolith ausgewählte Komponente umfaßt, und
80-99,99 Gew.-% eines anorganischen Oxidmaterials und/oder anorganischen Nicht-Oxidmaterials,
wobei die antibakterielle Keramik eine Teilchenrohdichte von 0,6-2,0 g/cm³ aufweist.

2. Antibakterielle Keramik nach Anspruch 1, worin das antibakterielle Material 0,01-20 Gew.-% des antibakteriellen Metalls oder Metallions und 99,99-80 Gew.-% des Trägers umfaßt.

3. Antibakterielle Keramik nach Anspruch 1 oder 2, worin das antibakterielle Metall oder Metallion zumindest eine aus Silber, Kupfer, Zink, Platin, Zinn, Arsen, Blei, Cadmium und Chrom ausgewählte Komponente umfaßt.

4. Antibakterielle Keramik nach einem der Ansprüche 1 bis 3, worin der Träger ein Phosphat umfaßt, das zumindest eine aus Kalziumphosphat, Zinkphosphat, Zirconiumphosphat und Aluminiumphosphat ausgewählte Komponente ist.

5. Antibakterielle Keramik nach Anspruch 4, worin das Phosphat zumindest eine aus Trikalziumphosphat, Kalziumhydrogenphosphat, Kalziumpyrophosphat, Kalziummetaphosphat, Hydroxyapatit und Apatithalogenid ausgewählte Komponente umfaßt.

6. Antibakterielle Keramik nach einem der Ansprüche 1 bis 5, worin das anorganische Oxidmaterial und das anorganische Nicht-Oxidmaterial in Wasser unlöslich und für den menschlichen Körper, Tiere und Pflanzen im wesentlichen unschädlich sind.

7. Verwendung einer antibakteriellen Keramik nach einem der Ansprüche 1 bis 6 als Bodenzusatzstoff für Gärten in Gebäuden oder auf Dächern.

8. Verfahren zur Herstellung einer antibakteriellen Keramik, umfassend die folgenden Schritte:
Herstellen eines antibakteriellen Keramikmaterials durch Laden eines antibakteriellen Metalls oder Metallions auf einen Träger, wobei der Träger zumindest eine aus Phosphat, Siliziumoxid und Zeolith ausgewählte Komponente umfaßt;
Vermischen von 0,01-20 Gew.-% des erhaltenen antibakteriellen Keramikmaterials mit 99,99-80 Gew.-% eines anorganischen Oxidmaterials und/oder eines anorganischen Nicht-Oxidmaterials, um ein erstes Gemisch zu erhalten
Vermischen von 5-50 Gewichtsteilen eines brennbaren Materials mit 100 Gewichtsteilen des ersten Gemischs, um ein zweites Gemisch zu erhalten; und
Brennen des zweiten Gemischs bei einer Temperatur von 500-1 300°C.

9. Verfahren zur Herstellung einer antibakteriellen Keramik nach Anspruch 8, worin das brennbare Material Kohlepulver, Getreidepulver, wie z.B. Weizenmehl oder Reismehl, oder Sägemehl ist.

10. Antibakterieller Keramikfilter, umfassend:
(i) 80-99,99 Gew.-% einer Basismaterialphase, umfassend:
eine Aggregatphase, umfassend ein anorganisches Oxidmaterial und/oder Nicht-Oxidmaterial;
eine anorganische Bindemittelphase; und
(ii) 0,01-20 Gew.-% eines antibakteriellen Materials, umfassend einen Träger und zumindest ein auf den Träger geladenes antibakterielles Metall oder Metallion; wobei der Träger zumindest eine aus Phosphat, Siliziumoxid und Zeolith ausgewählte Komponente umfaßt,
wobei der antibakterielle Keramikfilter eine Porosität von 20% oder mehr aufweist.

11. Antibakterieller Keramikfilter nach Anspruch 10, worin der Filter einen Porendurchmesser im Bereich von 20-8.000 µm aufweist.

## Revendications

1. Céramique antibactérienne comprenant :
0,01 à 20 % pds d'un matériau antibactérien comprenant un porteur et au moins un métal ou un ion métallique antibactérien chargé sur le porteur, le porteur comprenant au moins un composant sélectionné parmi un phosphate, de la silice et une zéolite, et
80 à 99,99 % pds d'un matériau inorganique oxyde et/ou d'un matériau inorganique non oxyde,
ladite céramique antibactérienne ayant une densité apparente des particules de 0,6 à 2,0 g/cm³.

2. Céramique antibactérienne selon la revendication 1, dans laquelle ledit matériau antibactérien comprend 0,01 à 20 % pds du métal ou de l'ion métallique antibactérien et 99,99 à 80 % pds du porteur.

3. Céramique antibactérienne selon la revendication 1 ou 2, dans laquelle ledit métal ou l'ion métallique antibactérien comprend au moins un composant sélectionné parmi l'argent, le cuivre, le zinc, le platine, l'étain, l'arsenic, le plomb, le cadmium et le chrome.

4. Céramique antibactérienne selon l'une quelconque des revendications 1 à 3 dans laquelle ledit porteur comprend un phosphate qui est au moins un composant sélectionné parmi le phosphate de calcium, le phosphate de zinc, le phosphate de zirconium et le phosphate d'aluminium.

5. Céramique antibactérienne selon la revendication 4, dans laquelle ledit phosphate comprend au moins un composant sélectionné parmi le tricalcium phosphate, le calcium hydrogénophosphate, le calcium pyrophosphate, le calcium métaphosphate, l'hydroxyapatite, un halogénure d'apatite.

6. Céramique antibactérienne selon l'une quelconque des revendications 1 à 5, dans laquelle ledit matériau inorganique oxyde et ledit matériau inorganique non oxyde sont insolubles dans l'eau et substantiellement sans danger pour les corps humains, les animaux et les plantes.

7. Utilisation d'une céramique antibactérienne selon l'une quelconque des revendications 1 à 6, en tant que conditionneur de sol pour un jardin prévu dans un bâtiment ou sur le sommet d'un toit.

8. Méthode pour produire une céramique antibactérienne comprenant les étapes de :
préparation d'un matériau de céramique antibactérienne par chargement d'un métal ou d'un ion métallique antibactérien sur un porteur, le porteur comprenant au moins un composant sélectionné parmi un phosphate, de la silice et une zéolite ;
mélange de 0,01 à 20 % pds du matériau de céramique antibactérienne obtenu avec 99,99 à 80 % pds d'un matériau inorganique oxyde et/ou d'un matériau inorganique non oxyde pour obtenir un premier mélange ;
mélange de 5 à 50 parties d'un matériau combustible avec 100 parties dudit premier mélange pour obtenir un second mélange ; et
calcination du second mélange à une température de 500 à 1300°C.

9. Méthode de production d'une céramique antibactérienne selon la revendication 8, dans laquelle ledit matériau combustible est une poudre de carbone, une poudre de graine telle que de la farine d'avoine ou de la farine de riz, ou de la sciure.

10. Filtre de céramique antibactérienne comprenant:
(i) 80 à 99,99 % pds d'une phase de matériau de base comprenant
une phase d'agrégat comprenant un matériau inorganique oxyde et/ou un matériau non oxyde;
une phase de liant inorganique ; et
(ii) 0,01 à 20 % pds d'un matériau antibactérien comprenant un porteur et au moins un métal ou un ton métallique antibactérien chargé sur ledit porteur ; ledit porteur comprenant au moins un composant sélectionné parmi un phosphate, de la silice et une zéolite,
ledit filtre de céramique antibactérienne ayant une porosité de 20 % ou plus.

11. Filtre de céramique antibactérienne selon la revendication 10, dans lequel ledit filtre a un diamètre de pore dans l'intervalle de 20 µm à 8 000 µm.
